# EUROPEAN PATENT SPECIFICATION

(11) **EP 0 406 907 B1**
(45) Date of publication and mention of the grant of the patent: **01.02.1995**
(21) Application number: 90112977.5
(22) Date of filing: 06.07.1990
(51) Int. Cl.: G06K 7/10

(54) **Bar code reader**
Strichcodeleser
Liseuse de code à bâtonnets

(30) Priority: 07.07.1989 JP 176915/89
(43) Date of publication of application: 09.01.1991
(73) Proprietor: SUMITOMO ELECTRIC INDUSTRIES, LTD., Osaka-shi, Osaka 541 (JP)
(72) Inventor: Takenaka, Shinya, C/o Osaka Works of Sumitomo, Konohana-ku, Osaka 554 (JP)
(74) Representative: Barz, Peter, Dr.

(56) References cited:
- EP-A- 0 085 804
- EP-A- 0 256 296
- DE-A- 3 728 211

## Description

The present invention relates to a bar code reader, and more particularly to a bar code reader for reading a bar code displayed on a surface of an object which is situated at a distance using a laser beam as indicated in the preamble of claim 1 and as e.g. known from DE-A- 3 728 211.

Recently, there is widely generalized a system in which information such as a manufacturer's name, a trade name, a price, the date of production or the like is printed as a bar code on surfaces of goods, the bar code thus printed is read by means of an optical bar code reader and thereby sale, stock or the like is managed.

There has been proposed a laser beam scanning type bar code reader. The laser beam scanning type bar code reader comprises a laser oscillator for outputting a laser beam, beam scanning means for scanning the laser beam at a constant scanning angle, detection means including a photocell for receiving light reflected by a screen of the bar code, converting the received light into an electric signal according to a quantity of the received light and outputting the electric signal, and identification means for identifying the bar code based on the electric signal.

According to the laser beam scanning type bar code reader, the laser beam is automatically scanned. Therefore, the laser beam scanning type bar code reader has an advantage that it is not required to move a scanning head with being come in contact with the object differently from a pen type bar code reader. Namely, in a fixed type bar code reader having each means incorporated in a case which can be fixed, it is sufficient to hold the object bar hand. Moreover, in a hand held type bar code reader having the device incorporated in a box which can be held by hand, it is sufficient to aim at the bar code.

The length of the bar code to be read in a scanning direction depends on a standard, for example, within about 2 to 10-odd cm. To generalize the bar code reader, it is required to correspond to the bar code having the various lengths. Accordingly, a scanning angle of the laser beam scanned by the laser beam scanning means is set large such that the bar code having a length of about 10-odd cm can be read with a normal distance (for example, about 10 cm) kept between the bar code reader and the bar code screen.

On the other hand, in the bar code reader of which scanning angle is set large in order to be adapted to the long bar code, the laser beam is scanned on a plurality of bar codes at a time if the plurality of bar codes are displayed in the scanning direction. Accordingly, both the bar code to be read and the bar code not to be read are captured in a locus on the screen of the scanned laser beam, that is, a scanning area. Therefore, there is a problem that the bar code to be read cannot be identified but the bar code not to be read is inputted.

It is also considered that the distance between the bar code reader and the bar code screen is adjusted according to the length of the bar code to be read by means of the bar code reader of which scanning angle is set so as to be adapted to the bar code having an average length and thereby only the bar code to be read is captured in the scanning area. In this case, however, it is difficult for an operator to optimize the distance at every reading operation. If the distance is long, a read error is occurred because the intensity of the light reflected by the bar code screen is lowered or the aim is moved easily.

It is an object of the present invention to provide a bar code reader which can precisely read a bar code irrespective of a length in the scanning direction of the bar code.

The above object is achieved by the bar code reader as indicated in claim 1.

The bar code reader for reading the bar code using light reflected by the screen on which the bar code is displayed comprises a scanning means for reflecting a laser beam irradiated from a laser oscillator toward said screen and scanning the laser beam thus reflected on said screen, said scanning means having a polygon mirror which is rotated and driven around an axis, said polygon mirror forming at least two kinds of flat reflecting surfaces for respectively scanning the laser beam along with the rotation of said polygon mirror in a rotary direction thereof, said reflecting surfaces respectively corresponding to opposite angles various with the kinds of reflecting surfaces, said opposite angle subtending a side of an isosceles triangle, said triangle contains the side in which a plane perpendicular to the axis and the reflecting surface intersect and the summit at which the axis and the plane intersect.

According to the bar code reader having the above construct ion, the opposite angle corresponding to each reflecting surface of the polygon mirror varies with the kind of the reflecting surface. On the other hand, an angle at which the laser beam is scanned by each reflecting surface is twice as large as the opposite angle corresponding to the reflecting surface and depends on the opposite angle. Accordingly, the laser beam is scanned at large and small scanning angles along with the rotation of the polygon mirror.

In case that the long bar code displayed in the scanning direction is to be read, the laser beam cannot scan the entire bar code even at the small scanning angle. Namely, since the bar code protrudes from the scanning area, it cannot be read.

However, since the laser beam is scanned at the large scanning angle along with the rotation of the polygon mirror, the bar code can be captured and read in the scanning area.

On the other hand, in case that one of a plurality short bar codes displayed in the scanning direction is to be read, the laser beam scans the plurality of bar codes at the large scanning angle. Namely, since the plurality of bar codes enter the scanning area, the bar code to be read cannot be read. However, since the laser beam is scanned at the small scanning angle along with the rotation of the polygon mirror, only the bar code to be read can be captured and read in the scanning area.

### IN THE DRAWINGS:

Fig. 1 is a perspective view in portions of a polygon mirror;
Figs. 2 and 3 are plan views of the polygon mirror;
Fig. 4 is a schematically perspective view of a bar code reader; and
Figs. 5 to 8 are views of a screen on which a laser beam is scanned, respectively.

An embodiment will be described in detail with reference to drawings.

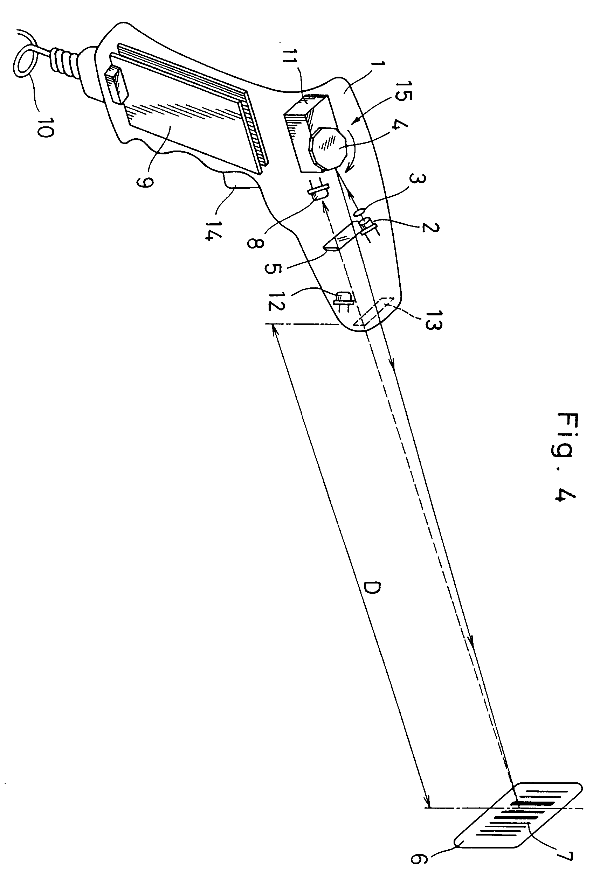

A bar code reader shown in Fig. 4 is of a laser beam scanning and hand held type. The bar code reader comprises a pistol-shaped casing 1. The casing 1 includes a laser oscillator 2, an aplanatic lens 3, beam scanning means 15, a cylindrical lens 5, an optical sensor 8 and a processing portion 9.

The laser oscillator 2 is a device for outputting a semiconductor laser or helium neon laser. The aplanatic lens 3 is a lens which converges light outputted from the laser oscillator 2.

The beam scanning means 15 has a polygon mirror 4 which reflects the converged laser beam and scans a screen 6 on which a bar code is displayed using the reflected laser beam and a motor 11 which rotates the polygon mirror 4 around an axis 41.

The cylindrical lens 5 condenses the light reflected by the screen 6. The optical sensor 8 consists of a photo diode or the like for receiving the reflected light condensed by the cylindrical lens 5. The processing device 9 includes a microcomputer which performs waveform shaping and binary indication of signals outputted from the optical sensor 8 to obtain the signals corresponding to the shape of a bar code 7 and identifies the contents of the bar code 7 based on the signals thus obtained.

A cord 10 which comes out of the casing 1 is a signal cord for supplying the signals outputted from the processing device 9 to an outer portion. A lever 14 is a read switch of the bar code reader.

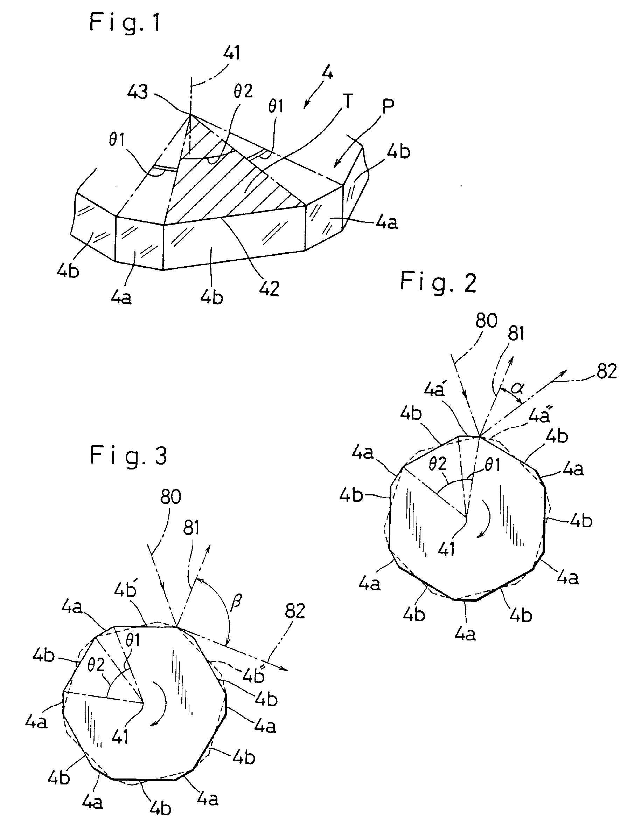

With reference to Figs. 1 to 3, the polygon mirror 4 has two kinds of flat reflecting surfaces 4a and 4b for scanning the laser beam on polygonal sides around the axis 41. The reflecting surfaces 4a and 4b are alternately arranged in a rotary direction of the polygon mirror 4. The reflecting surface 4b corresponded to an opposite angle ϑ2. The opposite angle ϑ2 is subtended by a side 42 of a isosceles triangle T. The triangle T contains the side 42 and a summit 43. The side is formed by a line in which a plane P perpendicular to the axis 41 and the reflecting surface 4b intersect. The summit 43 is formed by a point at which the axis 41 and the plane P intersect. Similarly the reflecting surface 4a corresponded to an opposite angle ϑ1. The opposite angles ϑ1 and ϑ2 are different from each other so that a scanning angle α by the reflecting surface 4a and a scanning angle β by the reflecting surface 4b are different from each other.

With reference to Fig. 2, the laser beam in a direction 80 is reflected in a direction 81 by the reflecting surface 4a (especially shown by 4a′) of the polygon mirror 4 shown in solid lines. If the polygon mirror 4 is rotated clockwise by 1 (shown in broken lines), the laser beam is reflected in a direction 82 by the reflecting surface 4a (especially shown by 4a˝) which is rotated and moved. An angle formed by the directions 81 and 82 is an angle at which the laser beam is shaken by the reflecting surface 4a, that is, a scanning angle α. With reference to Fig. 3, the angle formed by the directions 81 and 82 is a scanning angle β at which the laser beam is shaken by the reflecting surface 4b.

The scanning angles α and β of the laser beam by the reflecting surfaces 4a and 4b are twice as large as the opposite angles ϑ1 and ϑ2 corresponding to the reflecting surfaces 4a and 4b, respectively. Accordingly, if the opposite angle ϑ1 corresponding to the reflecting surface 4a is 15°, the scanning angle α of the laser beam by the reflecting surface 4a is 30 ° . Similarly, if the opposite angle ϑ2 corresponding to the reflecting surface 4b is 45° , the scanning angle β of the laser beam by the reflecting surface 4b is 90 ° . A distance D between the screen 6 and the bar code reader in which the bar code 7 can be aimed at most easily is about 10 cm. In the distance D, a locus of the laser beam scanned by the reflecting surface 4a on the screen 6 has a length of 5.4 cm, while the locus of the laser beam scanned by the reflecting surface 4b has a length of 20 cm.

Generally, among the bar codes in a scanning direction, the shortest one has a length of about 2 cm and the longest one has a length of about 10-odd cm. Therefore, the shortest bar code can be corresponded to by the reflecting surface 4a and the longest bar code by the reflecting surface 4b, respectively.

A series of operation from the scanning of the laser beam by the polygon mirror 4 to the identification of the bar code 7 by the processing device 9 is repeated until a correct answer is obtained.

According to the present embodiment, if the lever 14 is operated, the motor 11 is driven and thereby the polygon mirror 4 is rotated to irradiate the laser beam from the laser oscillator 2. The irradiated laser beam alternately beats against the reflecting surfaces 4a and 4b of the rotary polygon mirror 4 and thereby is reflected by them. In addition, the light thus reflected is alternately scanned at different scanning angles α and β corresponding to the rotary movement of the reflecting surfaces 4a and 4b. The scanned beams is irradiated on the screen 6 through an opening 13.

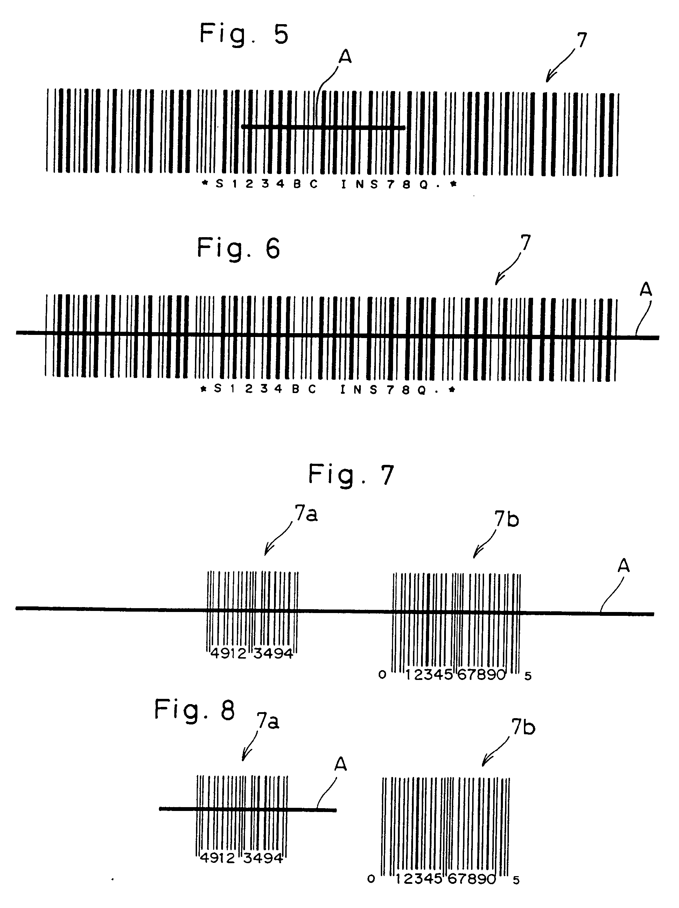

As shown in Fig. 5, when the long bar code is read, the locus of the laser beam to be scanned on the screen 6, that is, a scanning area A of the laser beam cannot cover the entire bar code 7 even if the laser beam is scanned at the small scanning angle α by the reflecting surface 4a. Namely, since the bar code 7 protrudes from the scanning area A of the laser beam, the bar code reader cannot read the bar code 7. However, since the laser beam is subsequently scanned at the large scanning angle β by the reflecting surface 4b, the bar code reader can capture and read the bar code 7 in the scanning area A as shown in Fig. 6.

On the other hand, in case that only a bar code 7a of two short bar code 7a, 7b in the scanning direction is to be read, the bar codes 7a and 7b enter the scanning area A even if the laser beam is scanned at the large scanning angle β by the reflecting surface 4b as shown in Fig. 7. Therefore, the bar code reader cannot read the bar code 7a to be read. However, since the laser beam is subsequently scanned at the small scanning angle α by the reflecting surface 4a, the bar code reader can capture and read only the bar code 7a to be read in the scanning area A as shown in Fig. 8.

Since the polygon mirror 4 has a plurality of reflecting surfaces 4a and 4b, the scanning at the same scanning angles α and β are performed plural times as the polygon mirror 4 is rotated one time. Therefore, the bar code reader can surely read the bar code.

Furthermore, in the bar code reader in which the reflecting surfaces 4a and 4b are consecutively arranged in the rotary direction of the polygon mirror 4, the scanning angle of the laser beam is changed at every half rotation of the polygon mirror 4. Therefore, it may be required that the polygon mirror 4 makes a half rotation or more until the bar code can be read and thereby the average read time may become longer. However, in the bar code reader of the present embodiment, different kinds of reflecting surfaces 4a and 4b are alternately arranged in the rotary direction of the polygon mirror 4. Therefore, the average time required for reading the bar code can be shortened.

There is a locus of the laser beam scanned by the reflecting surface 4a in the center of the locus of the laser beam scanned by the reflecting surface 4b on the screen. The latter locus seems brighter than the former one. Therefore, there is also an advantage that the bar code 7 can be aimed at easily. The bar code reader according to the present invention is not limited to the above embodiment. By way of example, three kinds of reflecting surfaces or more may be provided on the polygon mirror 4 such that the laser beam can be scanned at three kinds of different scanning angles or more by the polygon mirror 4.

The above embodiment can be also applied to a fixed type bar code reader.

As described above, according to the bar code reader of the present invention, the laser beam is scanned at the different angles by two kinds of reflecting surfaces of the polygon mirror. Therefore, the laser beam can be scanned at the large scanning angle and thereby the long bar code can be captured and read in the scanning area. In addition, the laser beam can be scanned at the small scanning angle and thereby only a bar code to be read of a plurality of short bar codes in the scanning direction can be captured and read in the scanning area. Accordingly, there can be obtained a peculiar effect that the bar code can be accurately read irrespective of the length thereof.

## Claims

1. A bar code reader for reading a bar code (7) using light reflected by a screen (6) on which the bar code is displayed comprising;
a scanning means (15) for reflecting a laser beam irradiated from a laser oscillator (2) toward said screen (6) and scanning the laser beam thus reflected on said screen (6),
said scanning means (15) having a polygon mirror (4) which is rotated and driven around an axis (41),
said polygon mirror (4) forming at least two kinds of flat reflecting surfaces (4a), (4b) for respectively scanning the laser beam along with the rotation of said polygon mirror (4) in a rotary direction thereof,
said reflecting surfaces (4a), (4b) respectively corresponding to opposite angles (ϑ1), (ϑ2),
said opposite angle (ϑ2) subtending a side (42) of an isosceles triangle (T), said triangle (T) containing the side (42) in which a plane (P) perpendicular to the axis (41) and the reflecting surface (4b) intersect and the summit (43) at which the axis (41) and the plane (P) intersect,
characterized in that said opposite angles (ϑ1, ϑ2) vary with the kinds of reflecting surfaces.

2. A bar code reader according to Claim 1, wherein the polygon mirror (4) has a plurality of reflecting surfaces (4a) of the same kind.

3. A bar code reader according to Claim 2, wherein the different kinds of reflecting surfaces (4a), (4b) are arranged sequentially and repeatedly in the rotating direction of the polygon mirror (4).

## Patentansprüche

1. Strichcode-Lesegerät zum Lesen eines Strichcodes (7) unter Verwendung von Licht, das von einem Schirm (6), auf welchem der Strichcode angezeigt wird, reflektiert wird, umfassend:
eine Abtasteinrichtung (15), um einen von einem Laseroszillator (2) ausgestrahlten Laserstrahl in Richtung des Schirms (6) zu reflektieren und den derart auf den Schirm (6) reflektierten Laserstrahl zu scannen,
wobei die Abtasteinrichtung (15) einen Polygonspiegel (4) aufweist, der um eine Achse (41) gedreht und angetrieben wird,
wobei der Polygonspiegel (4) mindestens zwei Arten von ebenen reflektierenden Oberflächen (4a), (4b) ausbildet, um den Laserstrahl zusammen mit der Drehung des Polygonspiegels (4) in dessen Drehrichtung jeweils zu scannen,
wobei die reflektierenden Oberflächen (4a), (4b) jeweils Scheitelwinkeln (ϑ1), (ϑ2) entsprechen,
wobei der Scheitelwinkel (ϑ2) einer Seite (42) eines gleichschenkligen Dreiecks (T) gegenüberliegt, wobei das Dreieck (T) die Seite (42), in der sich eine zu der Achse (41) senkrechte Ebene (P) und die reflektierende Oberfläche (4b) schneiden, und die Spitze (43) enthält, an der sich die Achse (41) und die Ebene (P) schneiden,
dadurch gekennzeichnet,
daß die Scheitelwinkel (ϑ1, ϑ2) mit den Arten von reflektierenden Oberflächen variieren.

2. Strichcode-Lesegerät nach Anspruch 1, bei dem der Polygonspiegel (4) eine Mehrzahl von reflektierenden Oberflächen (4a) von derselben Art aufweist.

3. Strichcode-Lesegerät nach Anspruch 2, bei dem die verschiedenen Arten von reflektierenden Oberflächen (4a), (4b) aufeinanderfolgend und sich wiederholend in der Drehrichtung des Polygonspiegels (4) angeordnet sind.

## Revendications

1. Lecteur de code-barres destiné à lire un code-barre (7) en utilisant la lumière réfléchie par un écran (6) sur lequel est affiché le code-barre, comportant :
des moyens de balayage (15) destinés à réfléchir un faisceau laser émis par un oscillateur à laser (2) en direction dudit écran (6) et à balayer le faisceau laser ainsi réfléchi sur ledit écran (6),
lesdits moyens de balayage (15) ayant un miroir polygonal (4) qui est entraîné en rotation autour d'un axe (41),
ledit miroir polygonal (4) formant au moins deux types de surfaces réfléchissantes plates (4a, 4b) afin de balayer de manière respective le faisceau laser avec la rotation dudit miroir polygonal (4) dans une direction de rotation de celui-ci,
lesdites surfaces réfléchissantes (4a, 4b) correspondant respectivement aux angles opposés (ϑ1, ϑ2),
ledit angle opposé (ϑ2) sous-tendant un côté (42) d'un triangle isocèle (T), ledit triangle (T) contenant le côté (42) dans lequel un plan (P) perpendiculaire à l'axe (41) et la surface réfléchissante (4b) se coupent et le sommet (43) au niveau duquel l'axe (41) et le plan (P) se coupent,
caractérisé en ce que lesdits angles opposés (ϑ1, ϑ2) varient avec les types de surfaces réfléchissantes.

2. Lecteur de code-barres selon la revendication 1, dans lequel le miroir polygonal (4) possède plusieurs surfaces réfléchissantes (4a) du même type.

3. Lecteur de code-barres selon la revendication 2, dans lequel les différents types de surfaces réfléchissantes (4a, 4b) sont disposés de manière séquentielle et répétée dans la direction de rotation du miroir polygonal (4).
